# EUROPÄISCHE PATENTANMELDUNG

(11) **EP 2 770 467 A1**
(43) Veröffentlichungstag der Anmeldung: **27.08.2014**
(21) Anmeldenummer: 13192321.1
(22) Anmeldetag: 11.11.2013
(51) Int. Cl.: G06Q 10/10, G06Q 20/02

(54) **Erweitern der Attribute einer Credentialanforderung**

(30) Priorität: 26.02.2013 DE 102013203101
(71) Anmelder: Siemens Aktiengesellschaft, 80333 München (DE)
(72) Erfinder: Falk, Rainer, 85586 Poing (DE); Fries, Steffen, 85598 Baldham (DE)

(57) **Zusammenfassung**

Um ein Security Credential auszustellen wird ein System (300) vorgeschlagen, das die folgenden Schritte durchgeführt:
- Versenden einer Credentialanforderung (302) durch einen Client (301), um durch einen Credentialaussteller (340) ein Security Credential (350) erstellen zu lassen;
- Empfangen der Credentialanforderung (302) durch einen zwischen den Client (301) und den Credentialaussteller (340) geschalteten Credential Attribute Intermediary (320, 545);
-Ermitteln zumindest eines Attributes (b1, b2, b3) des anfragenden Clients (301) durch den Credential Attribute Intermediary (320, 545);
-Bestätigen des zumindest einen durch den Credential Attribute Intermediary (320, 545) ermittelten Attributes (b1, b2, b3) gegenüber dem Credentialaussteller (340);
- Ausstellen des Security Credentials (350) durch den Credentialaussteller (340) in Abhängigkeit der durch den Credential Attribute Intermediary (320, 545) empfangenen Credentialanforderung (302) sowie des durch den Credential Attribute Intermediary (320, 545) bestätigten zumindest einen Attributes (b1, b2, b3).

## Beschreibung

Die vorliegende Erfindung bezieht sich auf das technische Gebiet des Ausstellens eines Security Credentials.

Security Credentials wie insbesondere digitale Zertifikate oder ein Security-Token in Form einer Datenstruktur oder eines Hardware-Security-Tokens mit einer gespeicherten Security-Token-Datenstruktur werden benötigt, um Security-Mechanismen nutzen zu können. Eine Sicherheitsinfrastruktur stellt solche Security Credentials bereit. In Automationsumgebungen werden von Geräten zunehmend Zertifikate und zugehörige private Schlüssel zur Authentisierung oder auch zum Aushandeln von Sicherheitsparametern zum Schutz der Kommunikation eingesetzt.

Insbesondere für geräteorientierte Security Credentials wird eine stark automatisierte Sicherheitsinfrastruktur benötigt. Dabei kann das notwendige Schlüsselmaterial von den Geräten selbst erzeugt werden und durch eine Zertifikatsanforderung, im Folgenden auch Certificate Signing Request (CSR) genannt, ein Zertifikat beantragt werden, das dann im Weiteren genutzt wird. Der Standort des Gerätes kann eine wichtige Information sein.

Ein digitales Zertifikat z.B. nach X.509v3, ist eine mit einer digitalen Signatur geschützte Datenstruktur, die einen öffentlichen Schlüssel manipulationsgeschützt an gewisse Attribute bindet (Name, Land, Organisation, ...). Einen Überblick gibt z.B. http://en.wikipedia.org/wiki/Public_key_certificate oder RFC5280 (http://www.ietf.org/rfc/rfc5280.txt). Ein digitales Zertifikat kann nicht nur für natürliche Personen ausgestellt werden, sondern auch für Geräte (Device Certificate).

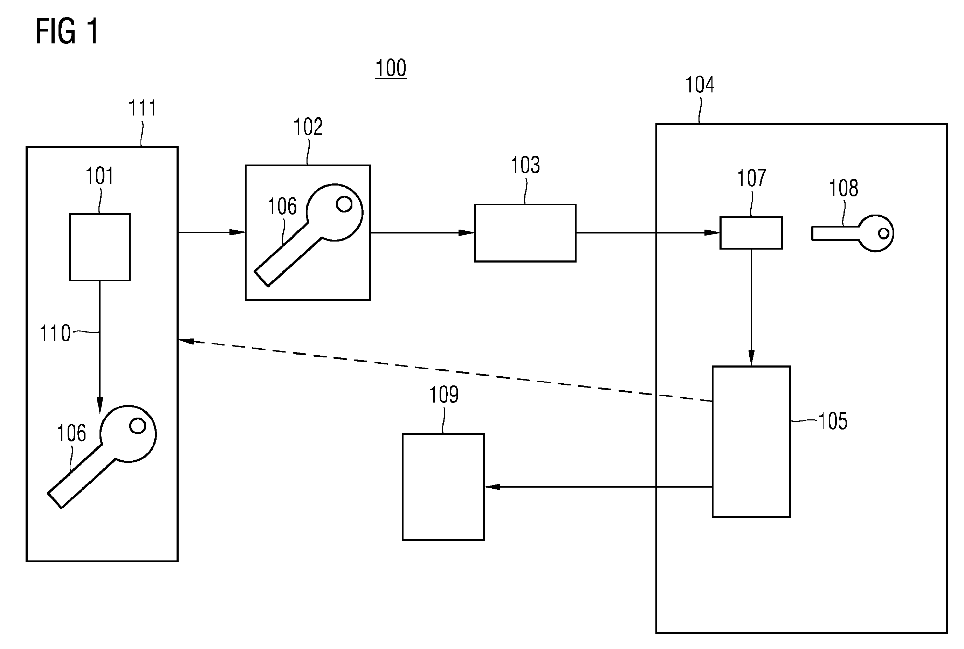

Es ist eine Public Key Infrastruktur bekannt, die digitale Zertifikate ausstellt, siehe z.B. http://en.wikipedia.org/wiki/Public-key_infrastructure. Auch Figur 1 zeigt eine bekannte Public Key Infrastruktur 100, bei welcher ein Nutzer 101 einen CSR 102 an eine Registration Authority (RA) 103 stellt. Nach Prüfung durch die RA 103 wird der Antrag an die Certificate Authority 104 weitergeleitet, die mittels eines privaten Schlüssels 108 der Certificate Authority 104 ein digitales Zertifikat 105 (z.B. gemäß X.509) ausstellt, dieses in einem Verfahrensschritt 107 digital signiert, und dann dem Nutzer 101 bereitstellt. Die RA 103 stellt dabei sicher, dass ein bestimmter öffentlicher Schlüssel 106 tatsächlich zu einer bestimmten Person gehört, z.B. unter Kontrolle eines Personalausweises. Ein Schlüsselpaar umfassend den öffentlichen Schlüssel 106 und einen privaten Schlüssel wurde dabei im Verfahrensschritt 110 durch die User-Infrastruktur 111 bereitgestellt. Es ist dabei auch bekannt, dass die Prüfung durch die RA 103 nicht durch eine Person erfolgt, sondern automatisiert durch eine Software-Komponente (http://www.securemetric.com/securepki.php Auto-RA).

In einem öffentlichen Register 109 werden die Public Key Zertifikate des Nutzers 101 und der Certification Authority 104, sowie eine Revokationsliste bereitgestellt.

In der Praxis werden digitale Zertifikate von einer Certification Authority (auch Certificate Authority oder CA genannt) ausgestellt. Ein Client sendet dazu eine Anfrage an die CA bzw. die RA.

Protokolle für ein automatisches Certificate Enrollment sind insbesondere:
- Certificate Signing Request CSR nach PKCS#10 (siehe http://www.rsa.com/rsalabs/node.asp?id=2132 oder http://tools.ietf.org/html/rfc2986)
- SCEP Simple Certificate Enrollment Protocol, siehe http://en.wikipedia.org/wiki/Simple_Certificate_Enrollment_Pr otocol oder http://datatracker.ietf.org/doc/draft-noursescep/
- XML Key Management Specification
   http://www.w3.org/TR/xkms2/

Eine CSR-Information hat dabei folgenden Aufbau:

```
   CertificationRequestInfo:
   CertificationRequestInfo ::= SEQUENCE {
        version INTEGER {v1(0)} (v1, ...),
        subject Name,
        subjectPKInfo SubjectPublicKeyInfo{{ PKInfoAlgorithms
 }},
        attributes [0] Attributes{{ CRIAttributes }}
   }
   SubjectPublicKeyInfo {ALGORITHM : IOSet} ::= SEQUENCE {
        algorithm AlgorithmIdentifier {{IOSet}},
        subjectPublicKey BIT STRING
   }
```

Eine CSR-Information enthält also im Wesentlichen einen öffentlichen Schlüssel (subjectPublicKey) und einen zugeordneten Namen (subject) und Attribute zur Beschreibung des Subjects (attributes).

Eine CSR-Anforderung (CSR-Request) enthält die CSR-Information, die durch eine digitale Signatur geschützt ist:

```
   CertificationRequest ::= SEQUENCE {
        certificationRequestInfo CertificationRequestInfo,
        signatureAlgorithm AlgorithmIdentifier{{ SignatureAl-
 gorithms }},
        signature BIT STRING
```

Allgemein kann eine Zertifikats-Anfrage durch ein Passwort, durch eine kryptographische Prüfsumme, durch eine Signatur o.ä. geschützt sein, sodass nur der berechtigte Client für sich ein Zertifikat anfordern kann. Dabei wird der eigentliche CSR nochmal in eine PKCS#7 Struktur verpackt, um die Vertraulichkeit des verwendeten Passworts zu gewährleisten.

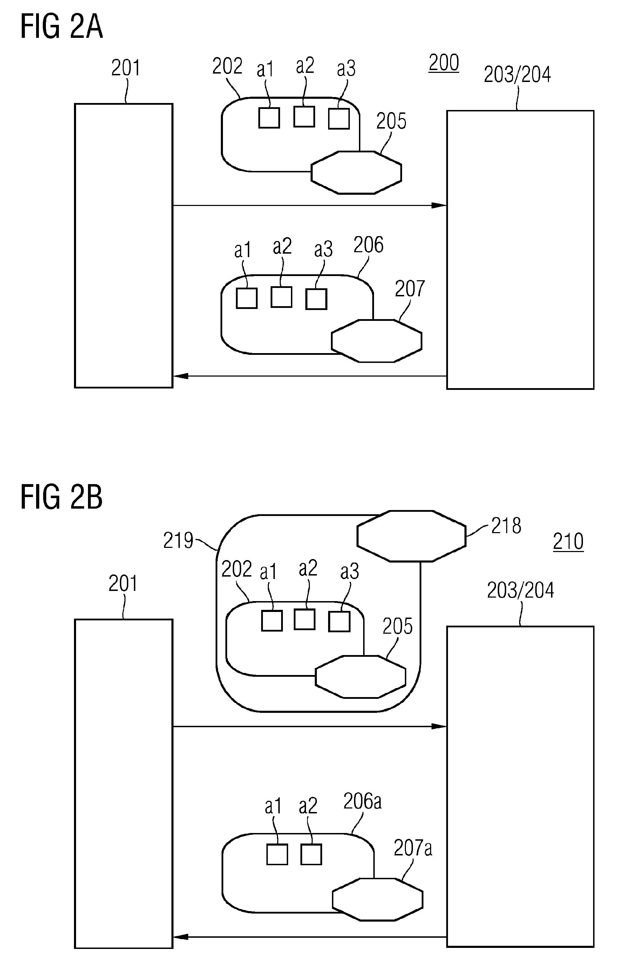

Der relevante Stand der Technik lässt sich anhand der Figuren 2A-2C wie folgt abstrahiert darstellen:
Figur 2A zeigt ein Verfahren und eine Infrastruktur 200 zum Ausstellen eines Zertifikates: In einem an eine kombinierte RA/CA-Einheit 203/204 versendeten CSR 202 gibt der Client 201 die Attribute a1, a2, a3 vor und seinen Namen an. Der Name kann dabei auch als ein spezielles Attribut aufgefasst werden. Die kryptographische Prüfsumme 205 (Checksum) des CSR 202 ist üblicherweise eine digitale Signatur 205 des Clients 201. Die Certification Authority 204 erhält den CSR 202, prüft diesen, erstellt basierend darauf ein mittels einer CA-Signatur 207 signiertes Zertifikat 206 und stellt dieses dem Client 201 zur Verfügung. Der CSR 202 und das Zertifikat 206 können zudem mittels eines Public Key pk der RA/CA-Einheit 203/204 verschlüsselt werden.
Figur 2B zeigt eine andere Variante eines Verfahrens zum Ausstellen eines Zertifikates, die z.B. beim SCEP-Protokoll eingesetzt wird, und bei welcher der Client 201 ein Passwort verwendet, um den CSR 212 zu authentisieren und zu autorisieren. Im Unterschied zu der in Figur 2A dargestellten Variante wird hier das Passwort als Attribut (z.B. a3) übertragen (das Passwort wird dabei nicht in das ausgestellte Zertifikat 206a als Attribut übernommen). Die Zertifikatsanfrage 212 wird dabei zusätzlich in eine PKCS#7-Datenstruktur 219 verpackt und mit dem öffentlichen Schlüssel 218 der CA 204 verschlüsselt, um die Vertraulichkeit (des verwendeten Passworts) zu schützen. Entsprechend könnte z.B. auch XML-Encryption verwendet werden. Das Zertifikat 206a umfasst eine CA Signatur 207a.

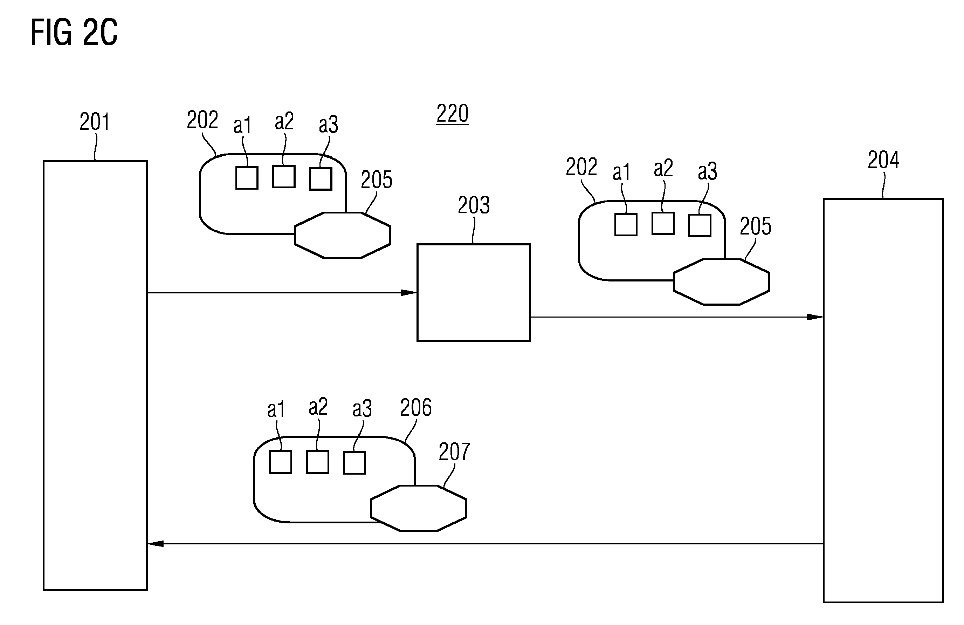

Figur 2C zeigt eine andere Variante, bei welcher eine separate RA 203 vorgesehen ist, so dass die Prüfung durch die vorgelagerte RA 203 erfolgt. Die RA 203 empfängt den CSR 202, prüft diesen und sendet ihn and die CA 204. Die CA 204 empfängt und prüft den CSR 202, und stellt das Zertifikat 206 aus und bereit. Auch hier können der CSR 202 und das Zertifikat 206 zudem mittels eines Public Key pk verschlüsselt werden.

Die Lösungen des Standes der Technik haben den Nachteil, dass der Client seine Attribute kennen muss, wenn er eine Zertifikatsanfrage stellt. Es können daher keine Attribute verwendet werden, welche der Client nicht kennt. Diese Attribute können z.B. mit der Einsatzumgebung des Clients zusammenhängen und beispielsweise einen Einbauort oder auch bestimmte Einschränkungen des Clients beschreiben. Es ist daher Aufgabe der vorliegenden Erfindung diesen Nachteil zu überwinden.

Diese Aufgabe wird durch die in den unabhängigen Ansprüchen vorgestellten Lösungen gelöst. Vorteilhafte Ausgestaltungen der Erfindung sind in weiteren Ansprüchen angegeben.

Gemäß dem vorgeschlagenen Verfahren versendet ein Client eine Credentialanforderung, um durch einen Credentialaussteller ein Security Credential erstellen zu lassen. Die Credentialanforderung wird durch einen zwischen den Client und den Credentialaussteller geschalteten Credential Attribute Intermediary empfangen. Zumindest ein Attribut des anfragenden Clients wird durch den Credential Attribute Intermediary ermittelt. Das zumindest eine durch den Credential Attribute Intermediary ermittelte Attribut wird gegenüber dem Credentialaussteller bestätigt. In Abhängigkeit der durch den Credential Attribute Intermediary empfangenen Credentialanforderung sowie des durch den Credential Attribute Intermediary bestätigten zumindest einen Attributes stellt der Credentialaussteller das Security Credential aus.

Das vorgeschlagene System umfasst einen Client, einen Credentialaussteller und einen zwischen den Client und den Credentialaussteller geschalteten Credential Attribute Intermediary. Der Client ist adaptiert, eine Credentialanforderung zu versenden, um durch den Credentialaussteller das Security Credential erstellen zu lassen. Der Credential Attribute Intermediary ist adaptiert, die Credentialanforderung zu empfangen und zumindest ein Attribut des anfragenden Clients zu ermitteln und dieses gegenüber dem Credentialaussteller zu bestätigen. Der Credentialaussteller ist adaptiert, das Security Credential in Abhängigkeit der durch den Credential Attribute Intermediary empfangenen Credentialanforderung sowie des durch den Credential Attribute Intermediary bestätigten zumindest einen Attributes zu erstellen.

Die Erfindung wird nachfolgend anhand der Figuren beispielsweise näher erläutert. Dabei zeigen:
- Figur 1: ein bekanntes Verfahren zum Ausstellen eines Zertifikates;
- Figuren 2A-2C: bekannte Varianten eines Verfahrens zum Ausstellen eines Zertifikates;
- Figur 3: ein Verfahren und ein System zum Ausstellen eines Security Credentials gemäß einer bevorzugten Ausführungsform der Erfindung;
- Figur 4: Varianten zu den anhand von Figur 3 beschriebenen Verfahren und Systemen gemäß einer weiteren bevorzugten Ausführungsform der Erfindung;
- Figur 5: zeigt ein System und ein Verfahren gemäss einer weiteren Ausführungsform der Erfindung.

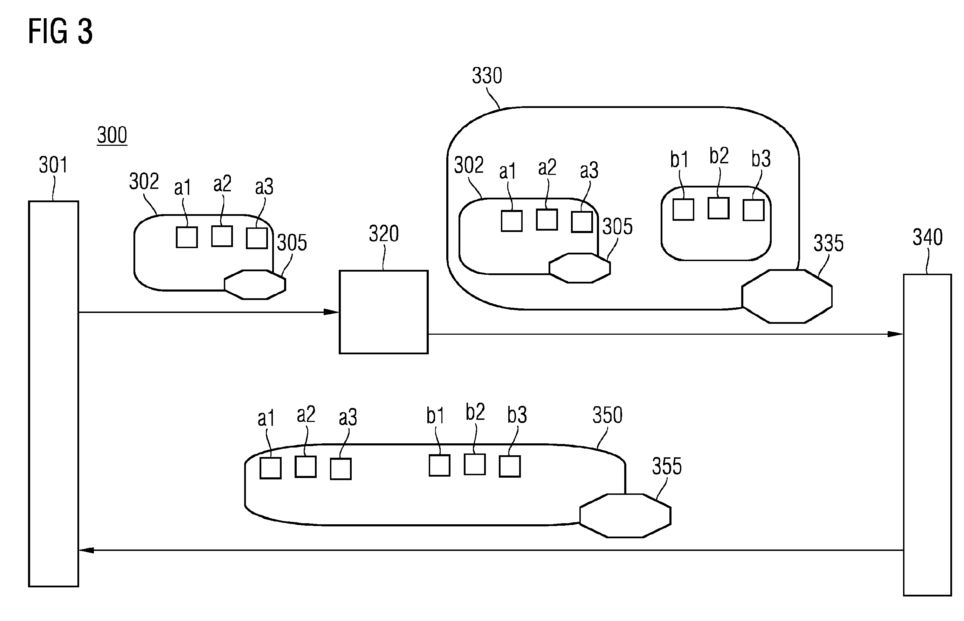

Figur 3 zeigt eine bevorzugte Ausführungsform eines als Public-Key-Infrastruktur ausgebildeten Systems 300, welches Security Credentials 350 ausstellt. Das System 300 umfasst einen Client 301, einen Credentialaussteller 340 und einen zwischen den Client 301 und den Credentialaussteller 340 geschalteten Credential Attribute Intermediary 320. Um durch den Credentialaussteller 340 ein als Zertifikat ausgebildetes Security Credential 350 ausstellen zu lassen, versendet der Client 301 eine Credentialanforderung 302. Der Credential Attribute Intermediary 320 empfängt die Credentialanforderung 302 und ermittelt als Reaktion darauf automatisch eines oder mehrere Attribute b1, b2, b3 des anfragenden Clients und bestätigt dieses oder diese gegenüber dem Credentialaussteller 340. Der Credentialaussteller 340 stellt das Security Credential 350 sowie optional weitere Security Credentials in Abhängigkeit der durch den Credential Attribute Intermediary 320 empfangenen Credentialanforderung 302 sowie in Abhängigkeit der durch den Credential Attribute Intermediary 320 bestätigten Attribute b1, b2, b3 aus.

Die Credentialanforderung 302 und das Security Credential 350 können zudem mittels eines Public Key pk des Credentialausstellers 340 verschlüsselt werden.

In der in Figur 3 dargestellten Ausführungsform bestätigt der Credential Attribute Intermediary 320 das zumindest eine ermittelte Attribut b1, b2, b3 gegenüber dem Credentialaussteller 340, indem der Credential Attribute Intermediary 320 eine erweiterte Credentialanforderung 330 erzeugt und diese an den Credentialaussteller 340 sendet. Die erweiterte Credentialanforderung 330 umfasst die Credentialanforderung 302 und das durch den Credential Attribute Intermediary 320 ermittelte zumindest eine Attribut b1, b2, b3.

Vorzugsweise umfasst die erweiterte Credentialanforderung 330 die unveränderten Credentialanforderung 302. Mit anderen Worten: Die erweiterte Credentialanforderung 330 umfasst neben den Attributen b1, b2, b3 die Credentialanforderung 302 inklusive der Attribute a1, a2, a3. Mit andern Worten kann der Credential Attribute Intermediary 320 als Erweiterung aufgefasst werden, welcher die erweiterten Attribute b1, b2, b3 ermittelt und diese Gegenüber dem Credentialaussteller 340 bestätigt.

In der in Figur 3 dargestellten Ausführungsform bestätigt der Credential Attribute Intermediary 320 das zumindest eine ermittelte Attribut b1, b2, b3 gegenüber dem Credentialaussteller 340 mittels einer Checksumme 335, wobei die Berechnung der Checksumme 335 die Credentialanforderung 302 und das zumindest eine Attribut b1, b2, b3 umfasst. Um sie besser von der Checksumme 305 unterscheiden zu können wird die Checksumme 335 im Folgenden auch CAI-Checksumme 335 genannt (CAI für Credential Attribute Intermediary oder auch für Certificate Attribute Intermediary). In bevorzugten Varianten ist die CAI-Checksumme 335 der erweiterten Credentialanforderung 330 eine digitale Signatur, z.B. eine RSA-Signatur, eine DSA-Signatur oder eine EC-DSA-Signatur. Es könnte sich jedoch auch um eine symmetrische kryptographische Prüfsumme, z.B. eine HMAC-SHA1-Prüfsumme handeln. Der erweiterte Certification Request kann z.B. als eine PKCS#7-Datenstruktur oder als XML-Datenstruktur realisiert sein. In einer anderen Variante wird vom Credential Attribute Intermediary 320 die Credentialanforderung 302 zusammen mit den erweiterten Attributen b1, b2, b3 über eine SSL/TLS-gesicherte Übertragungsverbindung zum Credentialaussteller 340 übertragen (z.B. als HTTP POST, HTTP GET oder als REST- oder SOAP-Message). In bevorzugten Ausführungsformen ist die CAI-Checksumme 335 somit ein kryptographischer Integritätscode oder eine digitale Signatur.

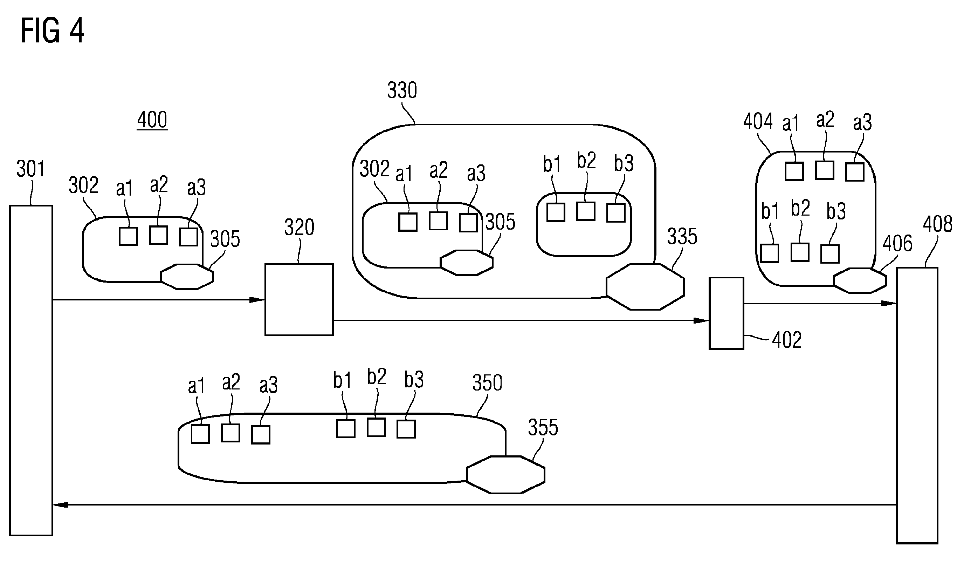

In dem in Figur 3 dargestellten System 400 umfasst der Credentialaussteller 340 eine Registration Authority und eine Credential Authority. Der Credentialaussteller 340 prüft die erweiterte Credentialanforderung, die Credentialanforderung, stellt das Security Credential aus und bereit. Figur 4 zeigt Varianten mit separater Registration Authority 402 zu den anhand von Figur 3 beschriebenen Ausführungsformen. Diese Varianten funktionieren ähnlich wie die anhand von Figur 3 beschriebenen Ausführungsformen, jedoch sind die Registration Authority (RA) 402 und die Certificate Authority (CA) 408 separate Einheiten. Die RA 402 empfängt und prüft die als erweiterten Certificate Request ausgestaltete erweiterte Credentialanforderung 330, prüft den im erweiterten Certificate Request 330 enthaltenen Certificate Request, und generiert daraus einen modifizierten erweiterten Certificate Request 404, welcher die durch den Client 301 in die Credentialanforderung 302 codierten Attribute a1, a2, a3, sowie die durch den Credential Attribute Intermediary 320 ermittelten Attribute b1, b2, b3 des Clients 301 umfasst, um diese gegenüber der CA 408 zu bestätigen. Der modifizierte erweiterte Certificate Request 404 ist durch eine von der Registration Authority vergebene RA-Checksumme 406 geschützt. Die CA 408 empfängt und prüft den Certificate Request 330, und stellt das Zertifikat 350 aus und bereit. Auch hier können der Certificate Request 330 und das Zertifikat 350 zudem mittels eines Public Key pk verschlüsselt werden.

Somit wird gemäss den in Figuren 3 und 4 dargestellten Ausführungsformen ein Zertifikat 350 für den Client 301 ausgestellt, wobei eine zwischengeschaltete Credential Attribute Intermediary 320 als von dem Client separate Attribut-Bestätigungs-Komponente zumindest ein Attribut b1, b2, b3 des anfragenden Clients ermittelt und gegenüber der CA bzw. gegenüber der RA bestätigt.

In den in den Figuren 3 und 4 dargestellten Ausführungsformen umfasst die durch den Client 301 versendete Credentialanforderung 302 weitere Attribute a1, a2, a3, welche durch den Client 301 in die Credentialanforderung 302 codiert werden. Ebenso kann der Client 301 die Credentialanforderung 302 mit einer Prüfsumme 305 versehen, welche als digitale Signatur des Clients 301 verwendet wird.

Vorzugsweise codiert das zumindest eine Attribut b1, b2, b3 eine Zugehörigkeit des Clients 301 zu einer Zone, zu einer Gruppe, zu einem Ausstellungsort, zu einem administrativen Verwaltungsbereich und/oder zu einem Verwendungszweck. Der Ausstellungsort kann dabei geographisch oder organisatorisch sein.

In einer Variante wird durch den Credential Attribute-Intermediary 320 ein Format des Security Credentials 350, ein Attribut des Security Credentials 350 oder ein durch den Credentialaussteller 340, 408 zu verwendener Crypto-Algorithmus zur Credentialausstellung angegeben. Beispielsweise wird das Zertifikatsformat oder die durch eine Certificate Authority des Credentialausstellers 340 zu verwendenen Crypto-Algorithmen durch den Credential Attribute Intermediary 320 angegeben. Auch kann das Zertifikatsformat, zumindest ein Zertifikatsattribut insbesondere ein eincodierter Verwendungszweck oder eine eincodierte Gültigkeitsdauer, das Security Credential oder die durch die Certificate Authority zu verwendenen Crypto-Algorithmen durch den Credential Attribute-Intermediary angegeben werden.

In einer anderen Variante wird der durch den Hersteller vergeben Gerätebezeichner (Name) durch einen vom Betreiber vergebenen Gerätebezeichner ersetzt oder um diesen ergänzt. Ersetzt werden kann er dabei nur, wenn die Credentialanforderung 302 nicht geschützt übertragen wird. Mit anderen Worten wird ein mit der Credentialanforderung 302 versendeter Gerätebezeichner durch einen vom Credential Attribute Intermediary 320 vergebenen Gerätebezeichner ersetzt oder ergänzt. Vorzugsweise ist der vom Credential Attribute Intermediary vergebene Gerätebezeichner das durch den Credential Attribute Intermediary ermittelte zumindest eine Attribut des anfragenden Clients oder wird durch dieses Attribut umfasst.

Die Anfrage 302 des Clients 301 kann insbesondere mit einem allgemeinen Client-Zertifikat (Geräte-Zertifikat) geschützt sein. Dabei kann es sich z.B. um ein vom Hersteller installiertes Gerätezertifikat handeln. Das angeforderte Zertifikat kann insbesondere ein Betreiberzertifikat sein, das dem Betreiber zugeordnet ist, der das Gerät betreibt. Vorzugsweise ist die Credentialanforderung 302 des Clients 301 mit einem vorhandenen Client-Schlüsselpaar (Zertifikat / öffentlicher Schlüssel und korrespondierender privater Schlüssel) geschützt, wobei das Client-Schlüsselpaar ein Client-Zertifikat umfasst, welches vorzugsweise ein vom Hersteller des Clients installiertes Gerätezertifikat oder ein dem Betreiber des Clients zugeordnetes Betreiberzertifikat ist. Der Betreiber ist dabei vorzugsweise der Betreiber des Credential Attribute Intermediary 320.

Alternativ dazu ist die Credentialanforderung 302 des Clients mit einem vorhandenen shared Secret zwischen Client 301 und Credentialaussteller 340 geschützt.

Das Security Credential 350 ist vorzugsweise ein digitales Zertifikat. Dabei kann es sich z.B. um ein Zertifikat gemäß X.509v3 handeln, aber auch um ein Security Token, z.B. eine SAML-Assertion. Die Credentialanforderung kann in diesem Fall auch als Zertifikatsanforderung, Certificate Request (CR) oder Certificate Signing Request (CSR) bezeichnet werden, der Credential Attribute Intermediary als Certificate Attribute Intermediary und der Credentialaussteller als Zertifikataussteller oder Certificate Authority. Bevorzugte Ausführungsformen erweitern die Attribute eines Certificate Signing Requests auf dem Übertragungspfad zwischen Client und Zertifikatsaussteller.

In den anhand von Figuren 3 und 4 dargestellten Ausführungsformen umfasst das Security Credential 350 die durch den Client 301 in die Credentialanforderung 302 codierten Attribute a1, a2, a3, sowie die durch den Credential Attribute Intermediary 320 ermittelten und gegenüber dem Credentialaussteller 340 bestätigten Attribute b1, b2, b3 des Clients 301. Das Security Credential 350 ist zudem durch eine von dem Credentialaussteller 350 erzeugte CA-Signatur 355 geschützt.

Gemäss weiteren Ausführungsformen kann ausgehend von einem allgemeinen Gerätezertifikat automatisch ein Betreiberspezifisches Gerätezertifikat angefordert und installiert werden. Es kann verhindert werden, dass ein Betreiberspezifisches Gerätezertifikat angefordert wird, das die Angaben zu einem falschen Betreiber enthält.

Bei Anwendung innerhalb der Energy Automation kann dadurch z.B. eine vereinfachte Zuordnung von IEDs (Intelligent Electronic Device - Feldgeräten) zur Stationen beim automatisierten Deployment erfolgen, oder es können Fehlkonfigurationen erkannt werden.

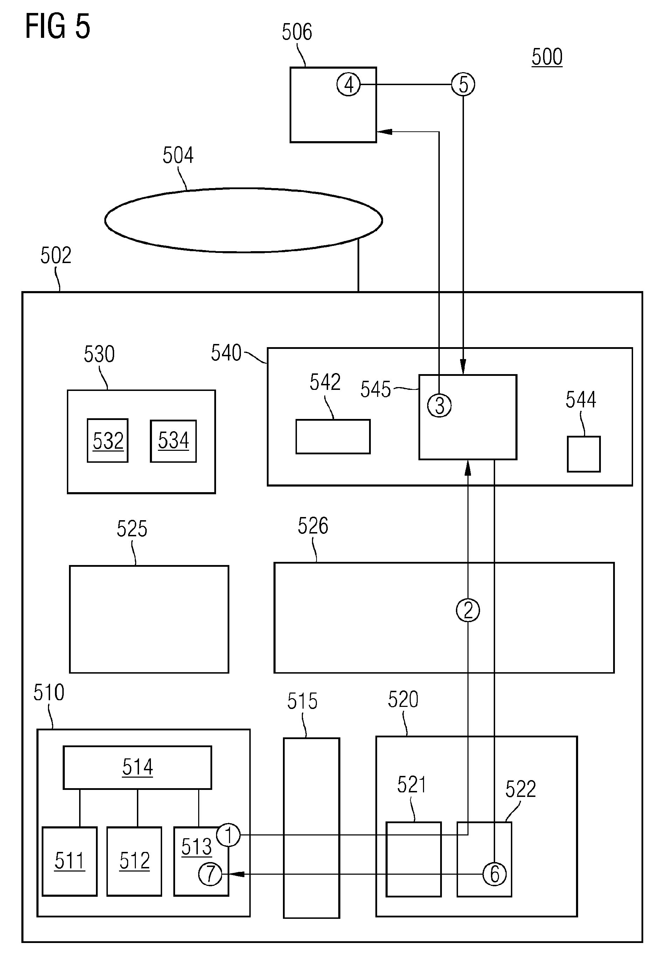

Figur 5 zeigt ein System 500 und ein Verfahren gemäss einer weiteren Ausführungsform der Erfindung, welches den Vorgang beim Einbringen neuer IEDs in eine Substation zeigt. Das System 500 umfasst einen Physical Substation Security Perimeter 502, ein Utility Communications Network 504, eine Certificate Authority (CA) 506, eine Station Bus Zone 510, eine Remote Serial Configuration Zone 515, eine Serial Intelligent Electronic Devices Process Zone 520, eine Automation Zone 525, eine Remote Access Zone 526, einen File Server 532 und eine de-militarized Zone 540. Die Station Bus Zone 510 umfasst ein Gerät nach IEC 61850 und mehrere Feldgeräte, auch IED genannt, IED 511, 512, 513. Ebenso umfasst die Serial IED Process Zone mehrere IEDs 521, 522. Die de-militarized Zone 540 umfasst einen Web Server 542, Remote Access Server 545 und einen Terminal Server 544. Das System 500 ist eine Weiterentwicklung des auf Seite 39, Figur 14 von IEC/TR 62351-10: "Power systems management and associated information exchange - Data and communications security - Part 10: Security architecture guidelines" dargestellten Systems und kann auch dessen weiteren Bestandteile enthalten.

Gemäss einer bevorzugten Ausführungsform umfasst das Verfahren die Figur 5 dargestellten folgenden Verfahrensschritte 1-7:
Verfahrensschritt 1: Das IED 513 generiert Schlüsselmaterial in Form eines Schlüsselpaares (public/private key). Zudem generiert das IED 513 eine als Certificate Signing Request (CSR) 302 ausgestaltete Credentialanforderung.
Verfahrensschritt 2: Das IED 513 sendet den CSR 302 an den als lokales VPN Gateway ausgestalteten Remote Access Server 545.
Verfahrensschritt 3: Der als lokales VPN Gateway ausgestalteten Remote Access Server 545 prüft und signiert den CSR 302. Der Remote Access Server 545 ermittelt zumindest ein Attribut b1, b2, b3 des anfragenden IED 513 und bestätigt dieses gegenüber der CA 506. Der als lokales VPN Gateway ausgestaltete Remote Access Server 545 agiert hier also als Credential Attribute Intermediary 320.
Verfahrensschritt 4: Die CA 506 (oder eine CA/RA-Einheit) prüft die Signatur des VPN Gateways 545 prüft den CSR.
Verfahrensschritt 5: Im Gutfall stellt die CA 506 ein Zertifikat 350 aus und sendet dieses zur Substation 502.
Verfahrensschritt 6: Die Substation 502 bzw. das lokale VPN Gateway 545 leitet das Zertifikat 350 zum IED 513.
Verfahrensschritt 7. Das IED 513 installiert das Zertifikat 350. Das IED 513 funktioniert somit also als Client 301.

## Patentansprüche

1. Verfahren zum Ausstellen eines Security Credentials (350), umfassend die Verfahrensschritte:
- Versenden einer Credentialanforderung (302) durch einen Client (301, 513), um durch einen Credentialaussteller (340, 408, 506) das Security Credential (350) erstellen zu lassen;
- Empfangen der Credentialanforderung (302) durch einen zwischen den Client (301, 513) und den Credentialaussteller (340, 408, 506) geschalteten Credential Attribute Intermediary (320, 545);
- Ermitteln zumindest eines Attributes (b1, b2, b3) des anfragenden Clients (301, 513) durch den Credential Attribute Intermediary (320, 545);
- Bestätigen des zumindest einen durch den Credential Attribute Intermediary (320, 545) ermittelten Attributes (b1, b2, b3) gegenüber dem Credentialaussteller (340, 408, 506);
- Ausstellen des Security Credentials (350) durch den Credentialaussteller (340, 408, 506) in Abhängigkeit der durch den Credential Attribute Intermediary (320, 545) empfangenen Credentialanforderung (302) sowie des durch den Credential Attribute Intermediary (320, 545) bestätigten zumindest einen Attributes (b1, b2, b3).

2. Verfahren nach Anspruch 1, wobei der Credential Attribute Intermediary (320, 545) das zumindest eine Attribut (b1, b2, b3) automatisch aufgrund des Empfangens der Credentialanforderung (302) ermittelt.

3. Verfahren nach Anspruch 1 oder 2, wobei der Credential Attribute Intermediary (320, 545) das zumindest eine ermittelte Attribut (b1, b2, b3) gegenüber dem Credentialaussteller (340, 408, 506) bestätigt, indem der Credential Attribute Intermediary (320, 545) eine erweiterte Credentialanforderung (330) erzeugt und an den Credentialaussteller (340, 408, 506) oder an eine dem Credentialaussteller (340, 408, 506) zudienende Registration Authority (402) sendet, wobei die erweiterte Credentialanforderung (330) die Credentialanforderung (302) und das zumindest eine Attribut (b1, b2, b3) des anfragenden Clients umfasst.

4. Verfahren nach einem der vorhergehenden Ansprüche, wobei der Credential Attribute Intermediary (320, 545) das zumindest eine ermittelte Attribut (b1, b2, b3) gegenüber dem Credentialaussteller (340, 408, 506) mittels einer Checksumme (335) bestätigt, wobei die Berechnung der Checksumme (335) die Credentialanforderung (302) und das zumindest eine Attribut (b1, b2, b3) umfasst.

5. Verfahren nach Anspruch 4, wobei die Checksumme (335) ein kryptographischer Integritätscode oder eine digitale Signatur ist.

6. Verfahren nach einem der vorhergehenden Ansprüche, wobei das zumindest eine Attribut (b1, b2, b3) eine Zugehörigkeit des Clients (301, 513) zu einer Zone, zu einer Gruppe, zu einem Ausstellungsort, zu einem administrativen Verwaltungsbereich, und/oder zu einem Verwendungszweck codiert.

7. Verfahren nach einem der vorhergehenden Ansprüche, wobei durch den Credential Attribute-Intermediary (320, 545) ein Format des Security Credentials (350), ein Attribut des Security Credentials (350) oder ein durch den Credentialaussteller (340, 408, 506) zu verwendender Crypto-Algorithmus zur Credentialausstellung angegeben wird.

8. Verfahren nach einem der vorhergehenden Ansprüche, wobei ein mit der Credentialanforderung (302) versendeter Gerätebezeichner durch einen vom Credential Attribute Intermediary (320, 545) vergebenen Gerätebezeichner ersetzt oder ergänzt wird.

9. Verfahren nach einem der vorhergehenden Ansprüche, wobei die Credentialanforderung (302) des Clients (301, 513) mit einem vorhandenen Client-Schlüsselpaar geschützt ist, wobei das Client-Schlüsselpaar ein Client-Zertifikat umfasst, welches vorzugsweise ein vom Hersteller des Clients installiertes Gerätezertifikat oder ein dem Betreiber des Clients zugeordnetes Betreiberzertifikat ist.

10. Verfahren nach einem der Ansprüche 1 bis 8, wobei die Credentialanforderung (302) des Clients mit einem vorhandenen shared Secret zwischen Client (301, 513) und Credentialaussteller (340, 408, 506) geschützt ist.

11. Verfahren nach einem der vorhergehenden Ansprüche, wobei das Security Credential (350) ein digitales Zertifikat ist.

12. System (300, 400, 500) zum Ausstellen eines Security Credentials (350), umfassend einen Client (301, 513), einen Credentialaussteller (340, 408, 506) und einen zwischen den Client (301, 513) und den Credentialaussteller (340, 408, 506) geschalteten Credential Attribute Intermediary (320, 545); wobei
- der Client (301, 513) adaptiert ist, eine Credentialanforderung (302) zu versenden, um durch den Credentialaussteller (340, 408, 506) das Security Credential (350) erstellen zu lassen;
- der Credential Attribute Intermediary (320, 545) adaptiert ist, die Credentialanforderung (302) zu empfangen und zumindest ein Attribut (b1, b2, b3) des anfragenden Clients (301, 513) zu ermitteln und dieses gegenüber dem Credentialaussteller (340, 408, 506) zu bestätigen;
- der Credentialaussteller (340, 408, 506) adaptiert ist, das Security Credential (350) in Abhängigkeit der durch den Credential Attribute Intermediary (320, 545) empfangenen Credentialanforderung (302) sowie des durch den Credential Attribute Intermediary (320, 545) bestätigten zumindest einen Attributes (b1, b2, b3) zu erstellen.

13. System (300, 400, 500) nach Anspruch 12, wobei der Credential Attribute Intermediary (320, 545) adaptiert ist, das zumindest eine Attribut (b1, b2, b3) automatisch aufgrund des Empfangens der Credentialanforderung (302) zu ermitteln.

14. System (300, 400, 500) nach Anspruch 12 oder 13, wobei der Credential Attribute Intermediary (320, 545) adaptiert ist, das zumindest eine ermittelte Attribut (b1, b2, b3) gegenüber dem Credentialaussteller (340, 408, 506) zu bestätigen, indem der Credential Attribute Intermediary (320, 545) eine erweiterte Credentialanforderung (330) erzeugt und an den Credentialaussteller (340, 408, 506) oder an eine dem Credentialaussteller (340, 408, 506) zudienende Registration Authority (402) sendet, wobei die erweiterte Credentialanforderung (330) die Credentialanforderung (302) und das zumindest eine Attribut (b1, b2, b3) des anfragenden Clients umfasst.

15. System (300, 400, 500) nach einem der Ansprüche 12 bis 14, wobei der Credential Attribute Intermediary (320, 545) adaptiert ist, das zumindest eine ermittelte Attribut (b1, b2, b3) gegenüber dem Credentialaussteller (340, 408, 506) mittels einer Checksumme (335) zu bestätigen, wobei die Berechnung der Checksumme (335) die Credentialanforderung (302) und das zumindest eine Attribut (b1, b2, b3) umfasst.

16. System (300, 400, 500) nach Anspruch 15, wobei die Checksumme (335) ein kryptographischer Integritätscode oder eine digitale Signatur ist.

17. System (300, 400, 500) nach einem der Ansprüche 12 bis 16, wobei das zumindest eine Attribut (b1, b2, b3) eine Zugehörigkeit des Clients (301, 513) zu einer Zone, zu einer Gruppe, zu einem Ausstellungsort, zu einem administrativen Verwaltungsbereich, und/oder zu einem Verwendungszweck codiert.

18. System (300, 400, 500) nach einem der Ansprüche 12 bis 17, wobei durch den Credential Attribute-Intermediary (320, 545) ein Format des Security Credentials (350), ein Attribut des Security Credentials (350) oder ein durch den Credentialaussteller (340, 408, 506) zu verwendener Crypto-Algorithmus angegeben wird.

19. System (300, 400, 500) nach einem der Ansprüche 12 bis 18, wobei der Credential Attribute Intermediary (320, 545) adaptiert ist, einen mit der Credentialanforderung (302) versendeten Gerätebezeichner durch einen vom Credential Attribute Intermediary (320, 545) vergebenen Gerätebezeichner zu ersetzen oder zu ergänzen.

20. System (300, 400, 500) nach einem der Ansprüche 12 bis 19, wobei die Credentialanforderung (302) des Clients (301, 513) mit einem vorhandenen Client-Schlüsselpaar geschützt ist, wobei das Client-Schlüsselpaar ein Client-Zertifikat umfasst, welches vorzugsweise ein vom Hersteller des Clients installiertes Gerätezertifikat oder ein dem Betreiber des Clients zugeordnetes Betreiberzertifikat ist.

21. System (300, 400, 500) nach einem der Ansprüche 12 bis 19, wobei die Credentialanforderung (302) des Clients mit einem vorhandenen shared Secret zwischen Client (301, 513) und Credentialaussteller (340, 408, 506) geschützt ist.

22. System (300, 400, 500) nach einem der Ansprüche 12 bis 21, wobei das Security Credential (350) ein digitales Zertifikat ist.
